# EUROPÄISCHE PATENTSCHRIFT

(11) **EP 1 333 082 B1**
(45) Veröffentlichungstag und Bekanntmachung des Hinweises auf die Patenterteilung: **09.11.2005**
(21) Anmeldenummer: 03002196.8
(22) Anmeldetag: 04.02.2003
(51) Int. Cl.: C09K 19/12, C09K 19/44, C09K 19/46

(54) **Flüssigkristallines Medium mit hoher Doppelbrechung und verbesserter UV-Stabilität**
Liquid crystalline medium with higher double refraction and improved UV stability
Milieu liquide cristallin présentant une double refraction élevée et une stabilité aux rayons ultraviolets améliorée

(30) Priorität: 05.02.2002 DE 10204607
(43) Veröffentlichungstag der Anmeldung: 06.08.2003
(73) Patentinhaber: Merck Patent GmbH, 64293 Darmstadt (DE)
(72) Erfinder: Heckmeier, Michael, Dr., 69502 Hemsbach (DE); Reiffenrath, Volker, 64380 Rossdorf (DE)
(74) Vertreter: Isenbruck, Günter

(56) Entgegenhaltungen:
- WO-A-01/79379
- DE-A- 10 020 061
- DE-A- 10 218 975
- DE-A- 10 224 046
- DE-A- 10 229 828
- DE-A- 19 919 348

## Beschreibung

Die vorliegende Erfindung betrifft ein flüssigkristallines Medium, sowie dieses Medium enthaltende elektrooptische Anzeigen.

Flüssige Kristalle werden vor allem als Dielektrika in Anzeigevorrichtungen verwendet, da die optischen Eigenschaften solcher Substanzen durch eine angelegte Spannung beeinflußt werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung, DAP-Zellen (Deformation ausgerichteter Phasen), Gast/Wirt-Zellen, TN (twisted nematic)-Zellen mit verdrillt nematischer Struktur, STN (super-twisted nematic)-Zellen, SBE (superbirefringence effect)-Zellen und OMI(optical mode interference)-Zellen. Die gebräuchlichsten Anzeigevorrichtungen beruhen auf dem Schadt-Helfrich-Effekt und besitzen eine verdrillt nematische Struktur.

Die Flüssigkristallmaterialien müssen allgemein eine gute chemische und thermische Stabilität und eine gute Stabilität gegenüber elektrischen Feldem und elektromagnetischer Strahlung besitzen. Ferner sollten die Flüssigkristallmaterialien niedere Viskosität aufweisen und in den Zellen kurze Schaltzeiten, tiefe Schwellenspannungen und einen hohen Kontrast ergeben.

Weiterhin sollten sie bei üblichen Betriebstemperaturen, d. h. in einem möglichst breiten Bereich unterhalb und oberhalb Raumtemperatur, eine geeignete Mesophase besitzen, beispielsweise für die oben genannten Zellen eine nematische Mesophase. Da Flüssigkristalle in der Regel als Mischungen mehrerer Komponenten zur Anwendung gelangen, ist es wichtig, daß die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nicht-linearen Elementen zur Schaltung einzelner Bildpunkte (MFK-Anzeigen) flüssigkristalline Medien mit großer positiver dielektrischer Anisotropie, breitem nematischem Phasenbereich, hohem spezifischem Widerstand, guter UV- und Temperaturstabilität und geringem Dampfdruck erwünscht.

Derartige Matrix-Flüssigkristallanzeigen sind bekannt. Als nichtlineare Elemente zur individuellen Schaltung der einzelnen Bildpunkte können neben passiven Elementen wie Varistoren oder Dioden aktive Elemente wie Transistoren verwendet werden. Man spricht dann von einer "aktiven Matrix".

Bei den aussichtsreichen TFT (thin film transistor)-Displays wird als elektrooptischer Effekt üblicherweise der TN-Effekt ausgenutzt. Man unterscheidet TFT's aus Verbindungshalbleitern wie z. B. CdSe oder TFT's auf der Basis von polykristallinem oder amorphem Silizium.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, daß je ein Filterelement einem schaltbaren Bildelelement gegenüber liegt. Die TFT-Anzeigen arbeiten üblicherweise als TN-Zellen mit gekreuzten Polarisatoren in Transmission und sind von hinten beleuchtet.

Derartige MFK-Anzeigen werden als Displays in Notebook-Computern, TV-Geräten (Taschenfernseher) sowie im Automobil- oder Flugzeugbau eingesetzt. Dabei sind die Winkelabhängigkeit des Kontrastes und die Schaltzeiten dieser MFK-Anzeigen nicht immer zufriedenstellend. Schwierigkeiten sind auch durch einen nicht ausreichend hohen spezifischen Widerstand der Flüssigkristallmischungen bedingt. Mit abnehmendem Widerstand verschlechtert sich der Kontrast einer MFK-Anzeige und es kann das Problem des "imagesticking" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Lebensdauern zu erhalten. Insbesondere bei Gemischen mit niedriger Schwellenspannung war es bisher nicht möglich, sehr hohe spezifische Widerstände zu realisieren, da flüssigkristalline Materialien mit hoher positiver dielektrischer Anisotropie Δε im allgemeinen auch eine höhere elektrische Leitfähigkeit aufweisen. Weiterhin ist es wichtig, daß der spezifische Widerstand eine möglichst geringe Zunahme bei steigender Temperatur sowie nach Temperatur- und/oder UV-Belastung zeigt. Um kurze Schaltzeiten der Anzeigen zu realisieren, müssen die Mischungen ferner eine kleine Rotationsviskosität aufweisen. Um einen Gebrauch der Anzeigen auch bei tiefen Temperaturen zu ermöglichen, beispielsweise für Anwendungen im Freien, im Automobil oder in der Avionik, dürfen auch bei tiefen Temperaturen keine Kristallisation und/oder smektische Phasen auftreten und sollte die Temperaturabhängigkeit der Viskosität möglichst gering sein.

Dazu sind flüssigkristalline Medien mit folgenden Eigenschaften gewünscht:
- insbesondere zu tiefen Temperaturen erweiterter nematischer Phasenbereich und geringe Temperaturabhängigkeit der Viskosität für Einsatz der Displays auch bei tiefen Temperaturen;
- hohe Beständigkeit gegenüber UV-Strahlung für eine lange Lebensdauer der Displays;
- hohe positive dielektrische Anisotropie Δε für niedrige Schwellenspannung Vₜₕ;
- geringe Rotationsviskosität γ₁ für kurze Schaltzeiten.

Der Erfindung liegt die Aufgabe zugrunde, flüssigkristalline Medien für IPS-, MFK-, TN- oder STN-Anzeigen, insbesondere für IPS-Anzeigen bereitzustellen, die sehr hohe spezifische Widerstände, niedrige Schwellenspannungen und kurze Schaltzeiten unter Wahrung der übrigen Randbedingungen aufweisen.

Um bei IPS-Anzeigen die Schichtdicken auf beispielsweise 2 bis 3 µm verringem zu können, sind Flüssigkristallmischungen mit einem hohen Wert der optischen Doppelbrechung An wünschenswert. Durch die Verringerung der Schichtdicken soll die Schaltzeit verkürzt werden und sollen die IPS-Anzeigen videofähig gemacht werden. Gleichzeitig bringen neue Füllmethoden für die Anzeigen eine höhere UV-Belastung der Flüssigkristallmischungen mit sich.

Aufgabe der Erfindung ist somit insbesondere auch, Flüssigkristallmischungen mit hoher Doppelbrechung Δn und verbesserter UV-Stabilität für IPS-Anzeigen zur Verfügung zu stellen.

Gelöst wird die Aufgabe durch ein flüssigkristallines Medium enthaltend die Verbindung der Formel (I) 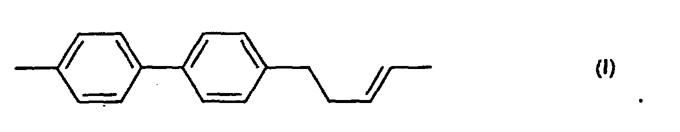 Im allgemeinen enthält das erfindungsgemäße flüssigkristalline Medium 1 - 30 Gew.-%, bevorzugt 2 - 20 Gew.-% und besonders bevorzugt 3 bis 30 Gew.-% der Verbindung der Formel (I).

Bevorzugte flüssigkristalline Medien enthalten
a) 3 bis 10 Gew.-% der Verbindung der Formel (I),
b) 10 bis 50 Gew.-% einer oder mehrerer Verbindungen der allgemeinen Formel (II) 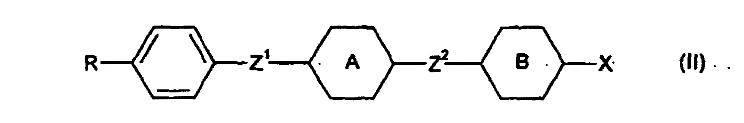 worin 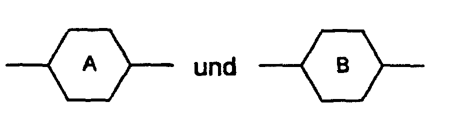 unabhängig voneinander 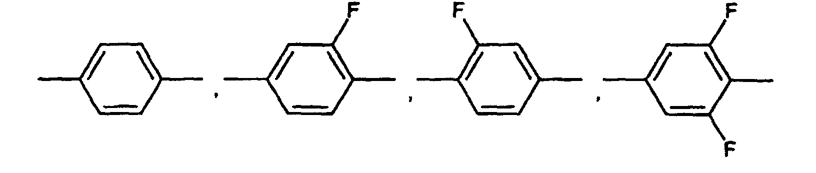 oder 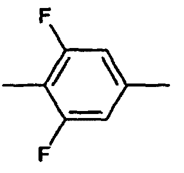 bedeuten,
   - Z¹, Z²: unabhängig voneinander eine Einfachbindung, -CH₂-CH₂-, -CF₂CF₂-, -COO- oder -CF₂O- bedeuten,
   - X: F, Cl, -OCF₃ oder -OCF₂CF₃, bevorzugt F oder -OCF₃, bedeutet, und
   - R: H oder einen unsubstituierten oder einen einfach durch -CN oder -CF₃ oder einen mindestens einfach durch Halogen substituierten Alkyl- oder Alkenylrest mit 1 bis 15 bzw. 2 bis 15 C-Atomen bedeutet, wobei in diesen Resten eine oder mehrere -CH₂-Gruppen jeweils unabhängig voneinander durch -O-, -S-, 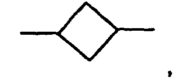 -CO-, -COO-, -OCO- oder -OCOO- so ersetzt sein können, dass O-Atome nicht direkt miteinander verknüpft sind,
c) 10 bis 50 Gew.-% einer oder mehrerer Verbindungen der allgemeinen Formel (III), und/oder (IV) 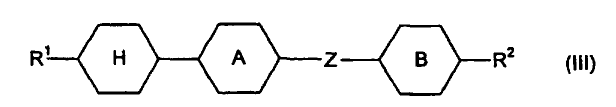 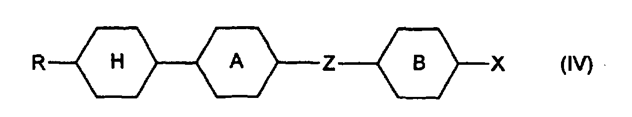 worin 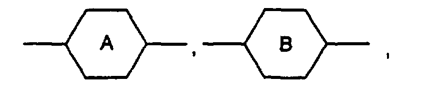 R und X wie oben definiert sind, R¹ und R² unabhängig voneinander die Bedeutungen von R haben und Z die Bedeutungen von Z¹ hat,
d) 10 bis 40 Gew.-% einer oder mehrerer Verbindungen der allgemeinen Formeln (V) und/oder (VI) 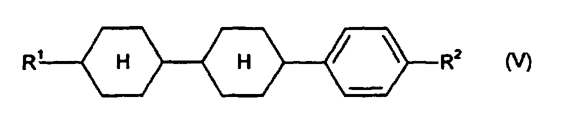 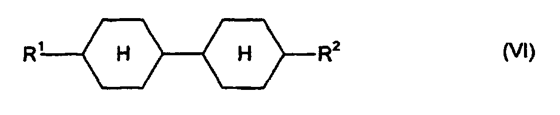 worin R¹ und R² wie oben definiert sind, und
e) 0 bis 15 Gew.-% einer oder mehrerer weiterer flüssigkristalliner Verbindungen.

In bevorzugt als Komponente b) eingesetzten Verbindungen der allgemeinen Formel (II) bedeuten 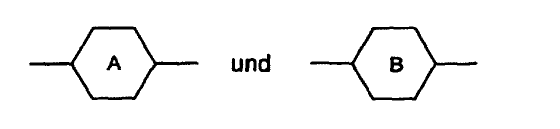 unabhängig voneinander

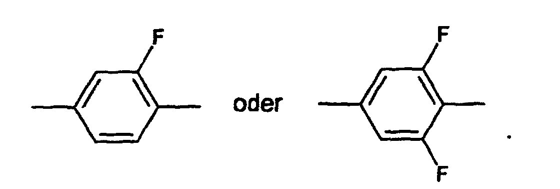

In weiterhin bevorzugt als Komponente b) eingesetzten Verbindungen der allgemeinen Formel (II) ist mindestens eine der Gruppen Z¹ oder Z² eine Einfachbindung, bevorzugt sind beide Gruppen Z¹ und Z² eine Einfachbindung.

R, R¹ und R² in den allgemeinen Formeln (11), (III), (IV), (V) und (VI) können unabhängig voneinander ein Alkylrest und/oder ein Alkoxyrest mit 1 - 15 C-Atomen sein, der geradkettig oder verzweigt sein kann. Vorzugsweise ist er geradkettig, hat 2, 3, 4, 5, 6 oder 7 C-Atome und ist demnach bevorzugt Methyl, Ethyl, Propyl, Butyl, Pentyl, Hexyl, Heptyl, Methoxy, Ethoxy, Propoxy, Butoxy, Pentoxy, Hexoxy oder Heptoxy, ferner Octyl, Nonyl, Decyl, Undecyl, Dodecyl, Tridecyl, Tetradecyl, Pentadecyl, Octoxy, Nonoxy, Decoxy, Undecoxy, Dodecoxy, Tridecoxy oder Tetradecoxy.

R, R¹ und R² können Oxaalkyl sein, vorzugweise geradkettiges 2-Oxapropyl (= Methoxymethyl), 2- (= Ethoxymethyl) oder 3-Oxabutyl (= Methoxyethyl), 2-, 3- oder 4-Oxapentyl, 2-, 3-, 4- oder 5-Oxahexyl, 2-, 3-, 4-, 5- oder 6-Oxaheptyl, 2-, 3-, 4-, 5-, 6- oder 7-Oxaoctyl, 2-, 3-, 4-, 5-, 6-, 7-oder 8-Oxanonyl, 2-, 3-, 4-, 5-, 6-, 7-, 8- oder 9-Oxadecyl.

R, R¹ und R² können ein Alkenylrest mit 2 - 15 C-Atomen sein, der geradkettig oder verzweigt sein kann. Vorzugsweise ist er geradkettig und hat 2 bis 10 C-Atome. Er ist demnach insbesondere Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl.

R, R¹ und R² können ein Alkylrest mit 3- 15 C-Atomen sein, bevorzugt mit 3 - 7 C-Atomen sein, in dem eine CH₂-Gruppe durch -O- und eine durch - CO- ersetzt ist, wobei diese bevorzugt benachbart sind. Somit beinhaltet dieser eine Acyloxygruppe -CO-O- oder eine Oxycarbonylgruppe -O-CO-. Vorzugsweise ist dieser geradkettig und hat 2 bis 6 C-Atome. Dieser ist also besonders bevorzugt Acetyloxy, Propionyloxy, Butyryloxy, Pentanoyloxy, Hexanoyloxy,Acetyloxymethyl, Propionyloxymethyl, Butyryloxymethyl, Pentanoyloxymethyl, 2-Acetyloxyethyl, 2-Propionyloxyethyl, 2-Butyryloxyethyl, 3-Acetyloxypropyl, 3-Propionyloxypropyl, 4-Acetyloxybutyl, Methoxycarbonyl, Ethoxycarbonyl, Propoxycarbonyl, Butoxycarbonyl, Pentoxycarbonyl, Methoxycarbonylmethyl, Ethoxycarbonylmethyl, Propoxycarbonylmethyl, Butoxycarbonylmethyl, 2-(Methoxycaronyl)ethyl, 2-(Ethoxycarbonyl)ethyl, 2-(Propoxycarbony)ethyl, 3-(Methoxycarbonyl)propyl, 3-(Ethoxycarbonyl)propyl oder 4-(Methoxycarbonyl)butyl.

R, R¹ und R² können ein Alkylrest mit 3 - 15 C-Atomen sein, in dem eine CH₂-Gruppe durch unsubstituiertes oder substituiertes -CH=CH- und eine benachbarte CH₂-Gruppe durch CO oder CO-O oder O-CO ersetzt ist, wobei dieser geradkettig oder verzweigt sein kann. Vorzugsweise ist er geradkettig und hat 4 bis 13 C-Atome. Er ist besonders bevorzugt Acryloyloxymethyl, 2-Acryloyloxyethyl, 3-Acryloyloxypropyl, 4-Acryloyloxybutyl, 5-Acryloyloxypentyl, 6-Acryloyloxyhexyl, 7-Acryloyloxyheptyl, 8-Acryloyloxyoctyl, 9-Acryloyloxynonyl, 10-Acryloyloxydecyl, Methacryloyloxymethyl, 2-Methacryloyloxyethyl, 3-Methacryloylosypropyl, 4-Methacryloyloxybutyl, 5-Methacryloyloxypentyl, 6-Methacryloyloxyhexyl, 7-Methacryloyloxyheptyl, 8-Methacryloyloxyoctyl oder 9-Methacryloyloxynonyl.

R, R¹ und R² können ein einfach durch -CN oder -CF₃ substituierter Alkylrest mit 1 -15 C-Atomen oder Alkenylrest mit 2 - 15 C-Atomen sein, wobei diese vorzugsweise geradkettig sind. Die Substitution durch CN oder CF₃ ist in beliebiger Position.

R, R¹ und R² können ein mindestens einfach durch Halogen substituierter Alkylrest mit 1 - 15 C-Atomen oder Alkenylrest mit 2 - 15 C-Atomen sein, wobei diese Reste vorzugsweise geradkettig sind und Halogen vorzugsweise F oder Cl ist. Bei Mehrfachsubstitution ist Halogen vorzugsweise F. Die resultierenden Reste schließen auch perfluorierte Rest ein. Bei Einfachsubstitution kann der Fluor- oder Chlorsubstituent in beliebiger Position sein, vorzugsweise ist er in ω-Position.

R, R¹ und R² können ein Alkylrest sein, in dem zwei oder mehr CH2-Gruppen durch -O- und/oder -CO-O- ersetzt sind, wobei dieser geradkettig oder verzweigt sein kann. Vorzugsweise ist er verzweigt und hat 3 bis 12 C-Atome. Er ist besonders bevorzugt Bis-carboxy-methyl, 2,2-Bis-carboxy-ethyl, 3,3-Bis-carboxy-propyl, 4,4-Bis-carboxy-butyl, 5,5-Bis-carboxy-pentyl, 6,6-Bis-carboxy-hexyl, 7,7-Bis-carboxy-heptyl, 8,8-Bis-carboxy-octyl, 9,9-Bis-carboxy-nonyl, 10,10-Bis-carboxy-decyl, Bis-(methoxycarbonyl)-methyl, 2,2-Bis-(methoxycarbonyl)-ethyl, 3,3-Bis-(methoxycarbonyl)-propyl, 4,4-Bis(methoxycarbonyl)-butyl, 5,5-Bis-(methoxycarbonyl)-pentyl, 6,6-Bis-(methoxycarbonyl)-hexyl, 7,7-Bis-(methoxycarbonyl)-heptyl, 8,8-Bis-(methoxycarbonyl)-octyl, Bis-(ethoxycarbonyl)-methyl, 2,2-Bis-(ethoxycarbonyl)-ethyl, 3,3-Bis-(ethoxycarbonyl)-propyl, 4,4-Bis(ethoxycarbonyl)-butyl, 5,5-Bis-(methoxycarbonyl)-pentyl, 6,6-Bis-(methoxycarbonyl)-hexyl, 7,7-Bis-(methoxycarbonyl)-heptyl, 8,8-bis-(methoxycarbonyl)-octyl, Bis-(ethoxycarbonyl)-methyl, 2,2-Bis-(ethoxycarbonyl)-ethyl, 3,3-Bis-(ethoxycarbonyl)-propyl, 4,4-Bis-(ethoxycarbonyl)-butyl oder 5,5-Bis-(ethoxycarbonyl)-hexyl.

Nachstehend werden die Verbindungen der allgemeinen Formeln (II) - (VI) zum Teil durch Acronyme wiedergegeben. Darin bedeuten

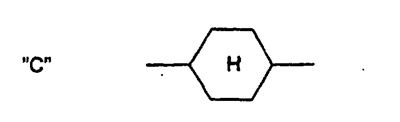

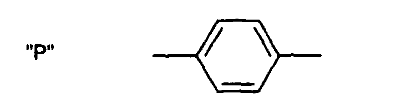

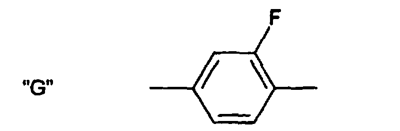

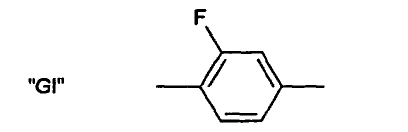

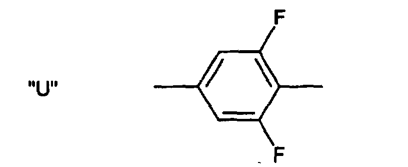

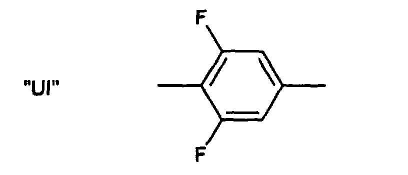

| | | |
|---|---|---|
| "V" | R, R¹ bzw. R² | = -CH=CH₂ |
| "VI" | R, R¹ bzw. R² | = -CH=CH-C₂H₂ₗ₊₁ |
| "kVI" | R¹ bzw. R²= | -CₖH₂ₖ-CH=CH-C₂H₂ₗ₊₁ |
| "n" | R bzw. R¹ | = -CₙH₂ₙ₊₁ |
| "m" | R² | = -CₘH₂ₘ₊₁ |
| "F" | X | = -F |
| "OCF₃" | X | = -OCF₃ |
| "Z" | -COO- | |
| "Q" | -CF₂O- | |

### Beispielsweise sind

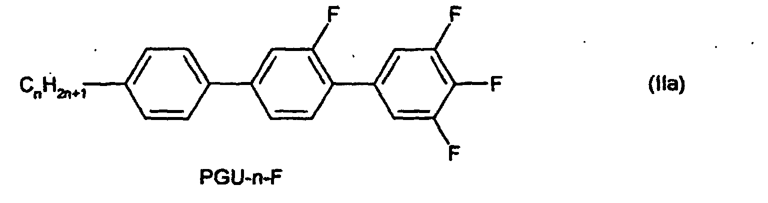

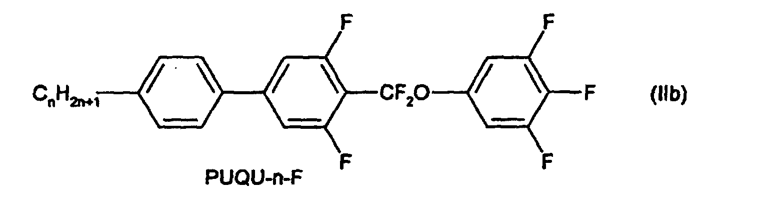

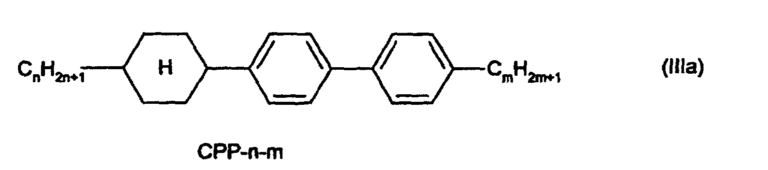

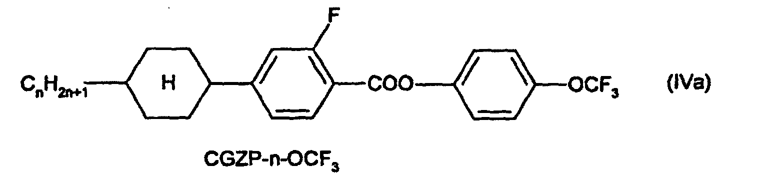

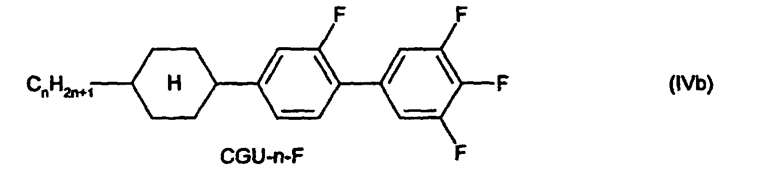

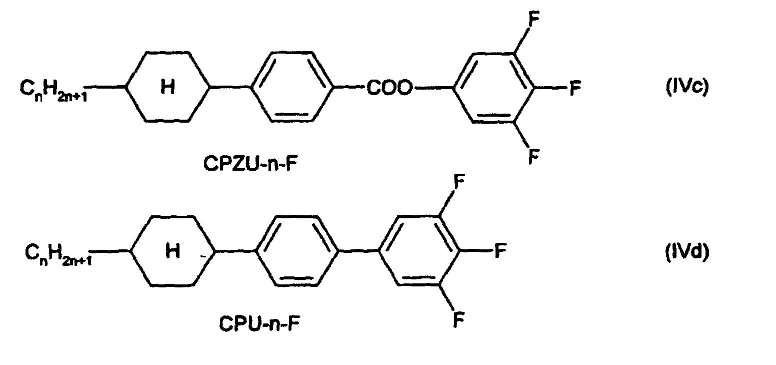

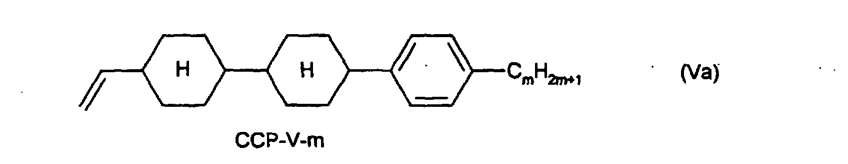

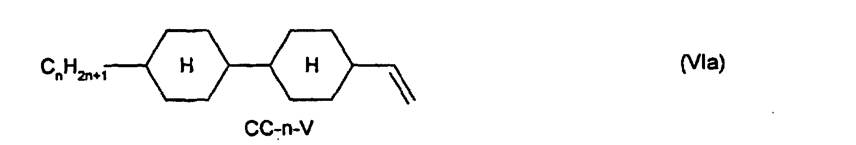

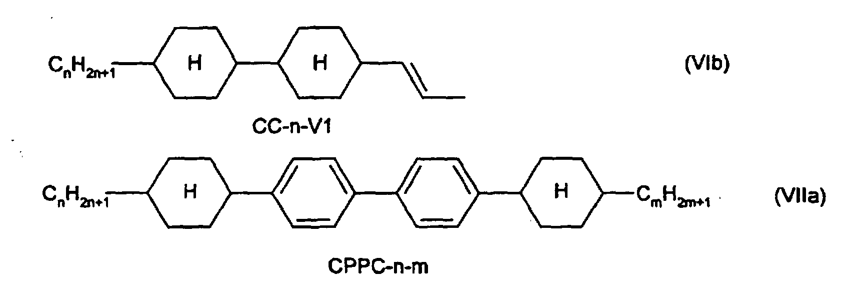

Bevorzugte Verbindungen (II) sind PGU-n-F, PGQU-n-F, PUQU-n-F, PGIGI-n-F, wobei n = 1 bis 7 ist. Beispiele sind PGU-2-F, PGU-3-F, PGU-5-F, PUQU-1-F, PUQU-2-F, PUQU-3-F und PUQU-5-F.

Besonders bevorzugt sind die obenstehenden Verbindungen (IIa) und (IIb) mit n = 1 bis 7. Beispiele sind PGU-1-F, PGU-2-F, PGU-3-F, PGU-5-F, PUQU-1-F und PUQU-2-F.

Vorzugsweise besteht die Komponente b) zu mindestens 50 Gew.-%, insbesondere zu mindestens 80 Gew.-% aus einer oder mehreren Verbindungen der allgemeinen Formeln (lla) und/oder (IIb) mit n = 1 bis 7.

Bevorzugte Verbindungen der allgemeinen Formel (III) sind CPP-n-m, CPG-n-F, CPU-n-F, CGZP-n-OCF₃, CPZU-n-F, wobei n, m = 1 bis 7 ist. Beispiele sind CPP-3-2 und CCP-3-1.

Bevorzugte Verbindungen der allgemeinen Formel (IV) sind CGZP-n-OCF₃, CGU-n-F, CPZU-n-F, CPU-n-F, wobei n = 1 bis 7 ist. Beispiele sind CGZP-2-OCF₃, CGZP-3-OCF₃, CGU-2-F, CGU-3-F, CGU-5-F, CPU-1-F, CPU-2-F und CPU-3-F.

Besonders bevorzugte Verbindungen der allgemeinen Formel (IV) sind die obenstehenden Verbindungen der allgemeinen Formeln (IVa) bis (IVd) mit n = 1 bis 7. Beispiele sind CGZP-2-OCF₃, CGZP-3-OCF₃, CGU-2-F, CGU-3-F, CGU-5-F, CPZU-2-F und CPZU-3-F.

Vorzugsweise besteht die Komponente c) zu mindestens 50 Gew.-%, insbesondere zu mindestens 80 Gew.-% aus einer oder mehreren Verbindungen der allgemeinen Formeln (IVa) bis (IVd) mit n = 1 bis 7.

Bevorzugte Verbindungen der allgemeinen Formel (V) und (VI) sind CCP-V-m, CC-n-V und CC-n-V1, wobei n, m = 1 bis 7 ist.

Besonders bevorzugte Verbindungen der allgemeinen Formel (V) und (VI) sind (Va), (Vla) und (VIb), wobei n, m = 1 bis 7 ist. Beispiele sind CCP-V-1, CC-3-V, CC-5-V, CC-3-V1 und CC-5-V1.

Vorzugsweise besteht die Komponente d) zu mindestens 50 Gew.-%, insbesondere zu mindestens 80 Gew.-% aus einer oder mehreren Verbindungen der allgemeinen Formeln (Va), (VIa) und/oder (VIb).

Eine geeignete weitere flüssigkristalline Verbindungen ist beispielsweise CPPC-n-m.

In einer besonders bevorzugten Ausführungsform der Erfindung enthält das flüssigkristalline Medium

| | | |
|---|---|---|
| a) | 3 bis 10 Gew.-% | Verbindungen der Formel (I), |
| b) | 25 bis 40 Gew.-% | Verbindungen der allgemeinen Formel (II) |
| c) | 30 bis 45 Gew.-% | Verbindungen der allgemeinen Formeln (III) und/oder (IV) |
| d) | 18 bis 30 Gew.-% | Verbindungen der allgemeinen Formeln (V) und/oder (VI), und |
| e) | 0 bis 10 Gew.-% | weiterer flüssigkristalliner Verbindungen. |

Die Verbindungen der Formel (I) und der allgemeinen Formeln (II) bis (VI) werden nach an sich bekannten Methoden dargestellt, wie sie in der Literatur (z. B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

Gegenstand der Erfindung sind auch elektrooptische Anzeigen, wie STN- oder MFK-Anzeigen, insbesondere IPS-Anzeigen, mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand, die die erfindungsgemäßen flüssigkristallinen Medien enthalten, sowie die Verwendung dieser Medien für elektrooptische Anzeigen.

Die erfindungsgemäßen Flüssigkristallmischungen ermöglichen eine bedeutende Erweiterung des zur Verfügung stehenden Parameterraumes.

Die erzielbaren Kombinationen aus Klärpunkt, Rotationsviskosität, optischer Anisotropie, Schwellenspannung, Doppelbrechung und UV-Stabilität übertreffen die bisherigen Materialien aus dem Stand der Technik. Damit sind die erfindungsgemäßen flüssigkristallinen Medien insbesondere für IPS-Anzeigen geeignet.

Der Aufbau der erfindungsgemäßen STN- bzw. MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefaßt und umfaßt auch alle Abwandlungen und Modifikationen der MFK-Anzeige, insbesondere auch Matrix-Anzeigeelemente auf Basis poly-Si TFT oder MIM-Anzeigen und IPS-Anzeigen.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßiger Weise bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation. Weiterhin ist es möglich, die Mischungen auf andere herkömmliche Arten, z. B. durch Verwendungen von Vormischungen, z.B. Homologen-Mischungen oder unter Verwendung von sogenannten "Multi-Bottle"-Systemen herzustellen.

Die Dielektra können auch weitere, dem Fachmann bekannte und in der Literatur beschriebene Zusätze enthalten. Beispielsweise können 0 - 15 Gew.-%, vorzugsweise 0-10 Gew.-%, pleochroitische Farbstoffe und/oder chirale Dotierstoffe zugesetzt werden. Die einzelnen zugesetzten Verbindungen werden in Konzentration von 0,01 bis 6 Gew.-%, bevorzugt von 0,1 bis 3 Gew.-% eingesetzt. Dabei werden jedoch die Konzentrationsangaben der übrigen Bestandteile der Flüssigkristallmischungen, also der flüssigkristallinen oder mesogenen Verbindungen, ohne Berücksichtigung der Konzentration dieser Zusatzstoffe angegeben.

Die Erfindung wird durch die nachstehenden Beispiele näher erläutert:

### Beispiele 1 und 2 und Vergleichsbeispiel

Es wurden Flüssigkristall-Mischungen der angegebenen Zusammensetzung hergestellt. Für diese Mischungen wurden gemessen:
- Temperatur des smektisch-nematischen Phasenübergangs S → N [°C];
- der Klärpunkt [°C];
- die optische Anisotropie Δn bei 589 nm und 20°C;
- die Rotationsviskosität γ₁ bei 20°C [mPa.s];
- die Spannungen für 10 %, 50 % und 90 % Transmission V₁₀, V₅₀ bzw. V₉₀ in Blickrichtung senkrecht zur Plattenoberfläche bei 20°C [V];
- die dielektrische Anisotropie Δε bei 1 kHz und 20°C
- anfängliche Voltage Holding Ratio VHR [dimensionslos]
- Voltage Holding Ratio nach UV-Belastung VHRᵤᵥ [dimensionslos]

Die Messungen erfolgten wie in "Merck Liquid Crystals, Physical Properties of Liquids Crystals, Description of the Measurement Methods", herausgegeben von Dr. Werner Becker, Merck KGaA, November 1997, beschrieben.

Die elektrooptischen Daten wurden in einer TN-Zelle im 1. Minimum (d · Δn = 0,5 µm) bei 20°C gemessen.

Die Voltage Holding Ratio nach UV-Belastung wurde wie folgt gemessen: Eine mit der betreffenden Mischung gefüllten VHR-Testzellen wird in einem Gerät "Suntest" der Fa. Xenotest bei maximaler Bestrahlungsstärke von 765 W/m² unter Verwendung eines UV-Spezialglasfilters für Simulation "im Freien" 2 h lang bestrahlt. Die Entfernung der Lampenachse zur Probe beträgt ca. 23 cm. Anschließend wird die VHR gemessen.

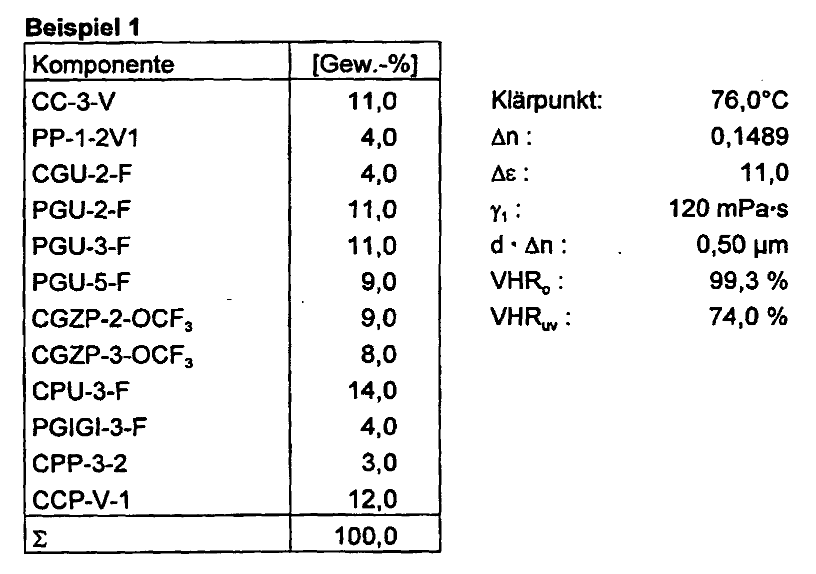

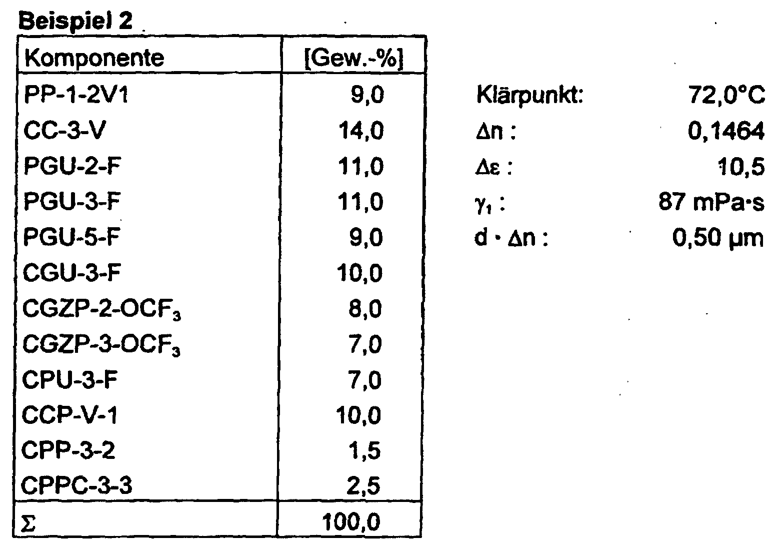

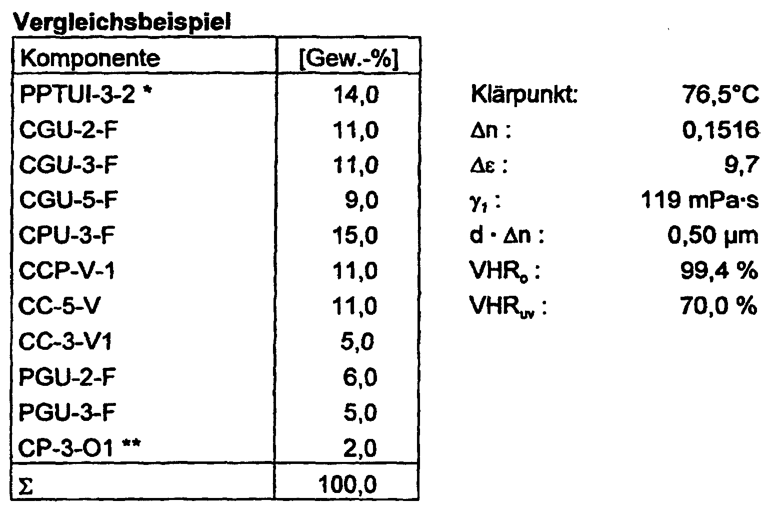

### Bemerkung:

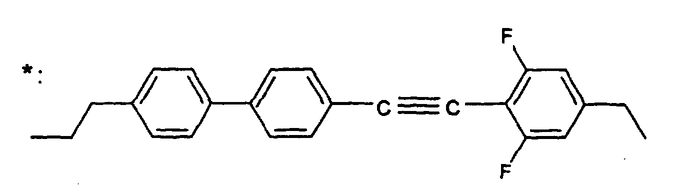

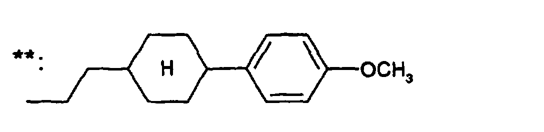

Wie ein Vergleich von Beispiel 1 mit dem Vergleichsbeispiel zeigt, ist bei vergleichbaren Werten für Klärpunkt, Δn, Δε und γ₁ die UV-Stabiltität der erfindungsgemäßen Flüssigkristallmischungen deutlich besser.

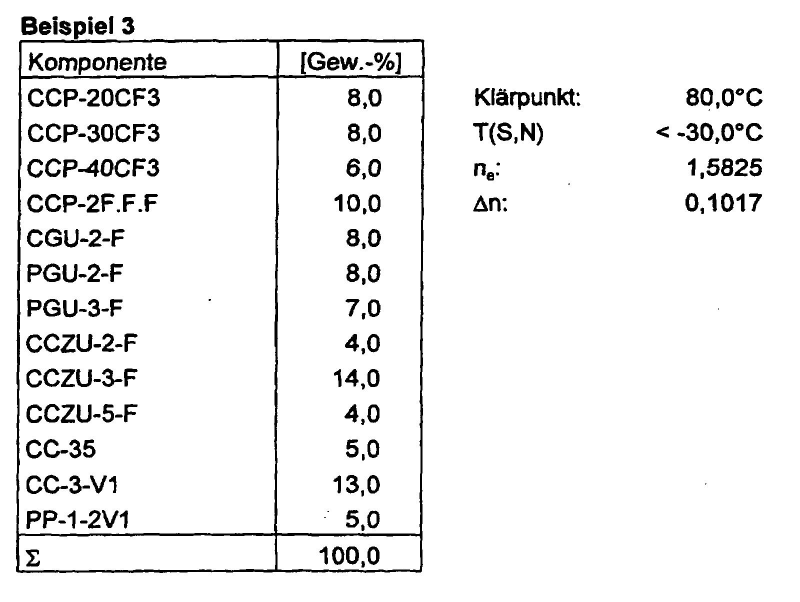

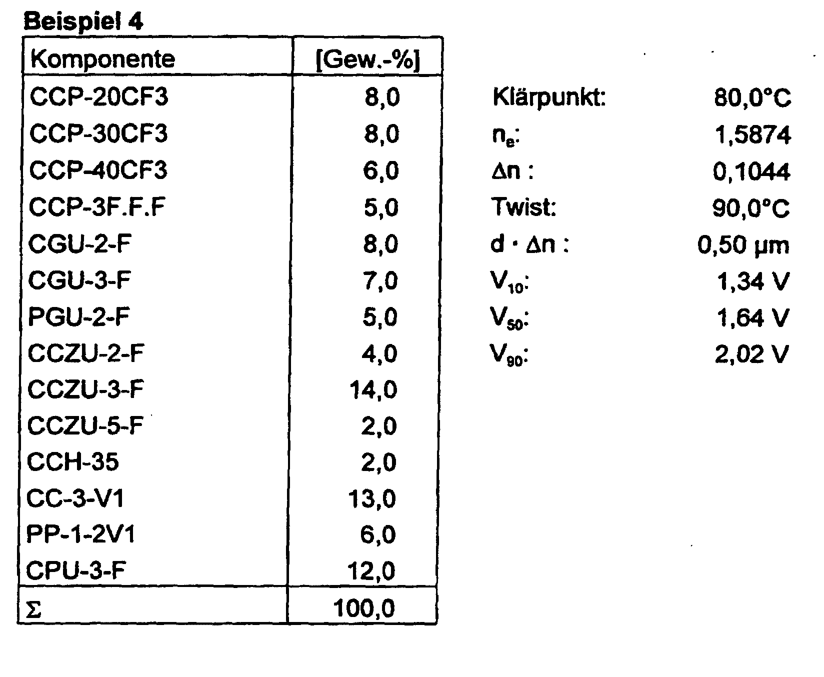

## Patentansprüche

1. Flüssigkristallines Medium enthaltend die Verbindung der Formel (I)

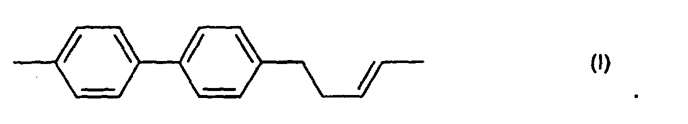

2. Flüssigkristallines Medium nach Anspruch 1, enthaltend 1 bis 30 Gew.-%, bevorzugt 2 bis 20 Gew.-%, besonders bevorzugt 3 bis 10 Gew.-% der Verbindung der Formel (I).

3. Flüssigkristallines Medium nach Anspruch 1 oder 2 enthaltend
a) 3 bis 10 Gew.-% Verbindungen der Formel (I),
b) 10 bis 50 Gew.-% einer oder mehrerer Verbindungen der allgemeinen Formel (II) 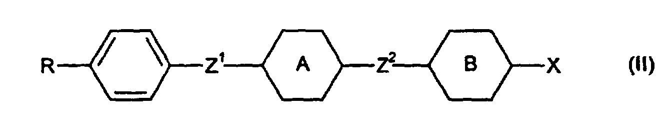 worin 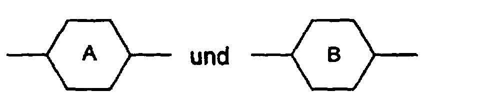 unabhängig voneinander 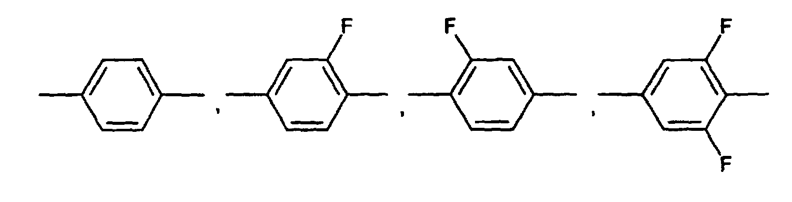 oder 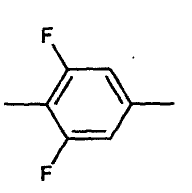 bedeuten,
Z¹, Z² unabhängig voneinander eine Einfachbindung, -CH₂-CH₂-, CF₂CF₂, -COO- oder -CF₂O- bedeuten,
X F, Cl, -OCF₃ oder -OCF₂CF₃, bevorzugt F oder -OCF₃, bedeutet, und
R H oder einen unsubstituierten oder einen einfach durch -CN oder -CF₃ oder einen mindestens einfach durch Halogen substituierten Alkyl- oder Alkenylrest mit 1 bis 15 bzw. 2 bis 15 C-Atomen bedeutet, wobei in diesen Resten eine oder mehrere -CH₂-Gruppen jeweils unabhängig voneinander durch -O-, -S-, 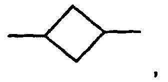 -CO-, -COO-, -OCO- oder -OCOO- so ersetzt sein können, dass O-Atome nicht direkt miteinander verknüpft sind,
c) 10 bis 50 Gew.-% einer oder mehrerer Verbindungen der allgemeinen Formel (III), und/oder (IV) 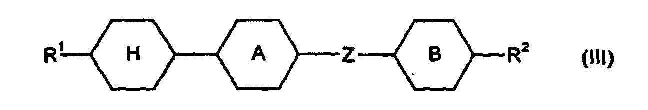 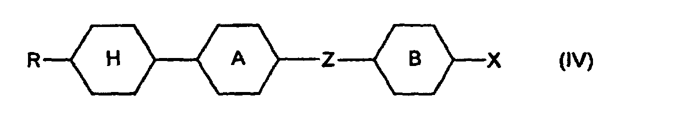 worin 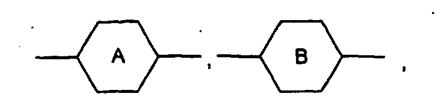 R und X wie oben definiert sind, R¹ und R² unabhängig voneinander die Bedeutungen von R haben und Z die Bedeutungen von Z¹ hat,
d) 10 bis 40 Gew.-% einer oder mehrerer Verbindungen der allgemeinen Formeln (V) und/oder (VI) 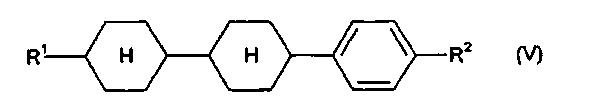 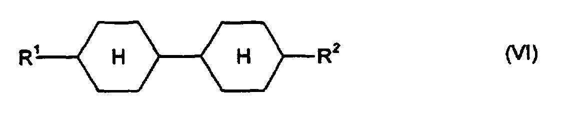 worin R¹ und R² wie oben definiert sind, und
e) 0 bis 15 Gew.-% einer oder mehrerer weiterer flüssigkristalliner Verbindungen.

4. Flüssigkristallines Medium nach Anspruch 3, **dadurch gekennzeichnet**, das in der allgemeinen Formel (II) 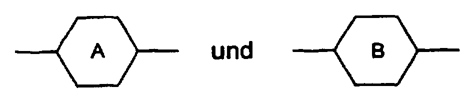 unabhängig voneinander 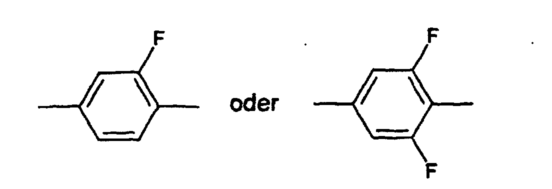 bedeuten.

5. Flüssigkristallines Medium nach Anspruch 3 oder 4, **dadurch gekennzeichnet, dass** in der allgemeinen Formel (II) mindestens eine der Gruppen Z¹ oder Z², bevorzugt beide Gruppen Z¹ oder Z² eine Einfachbindung sind.

6. Flüssigkristallines Medium nach einem der Ansprüche 1 bis 5 enthaltend eine oder mehrere Verbindungen der allgemeinen Formeln (IIa) und/oder (IIb) 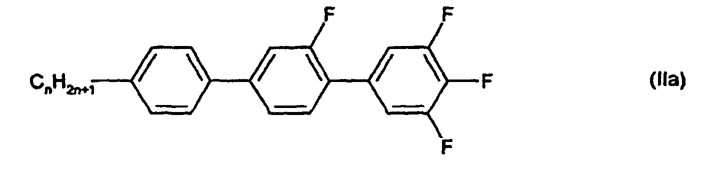 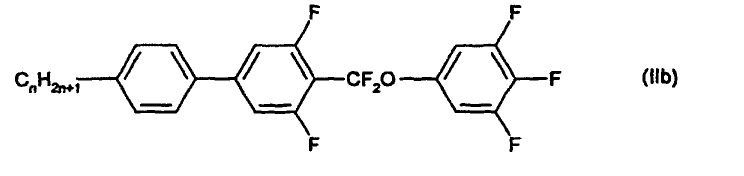 mit n = 1 bis 7.

7. Flüssigkristallines Medium nach einem der Ansprüche 1 bis 6 enthaltend eine oder mehrere Verbindungen der allgemeinen Formeln (IVa) bis (IVd) 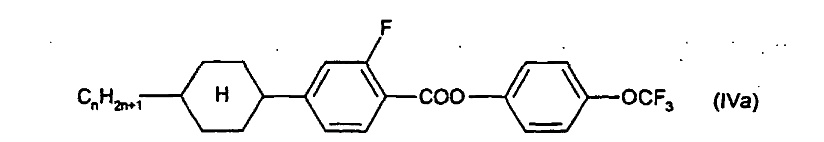 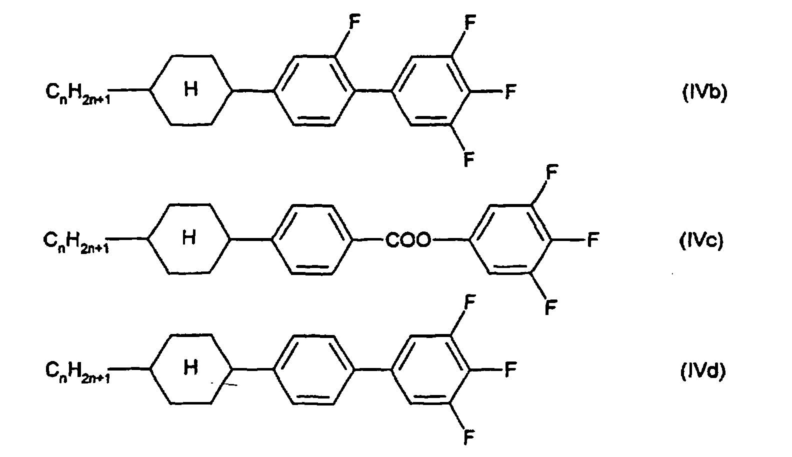 mit n = 1 bis 7.

8. Flüssigkristallines Medium nach einem der Ansprüche 1 bis 7, enthaltend eine oder mehrere Verbindungen der allgemeinen Formeln (Va) und/oder (VIa) 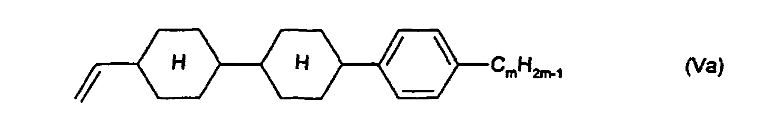 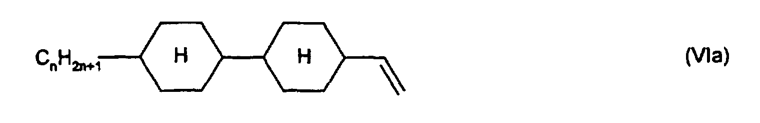 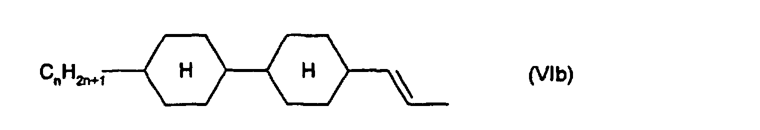 mit n, m = 1 bis 7.

9. Flüssigkristallines Medium nach einem der Ansprüche 3 bis 8 enthaltend
a) 3 bis 10 Gew.-% Verbindungen der Formel (I),
b) 25 bis 40 Gew.-% Verbindungen der allgemeinen Formel (II),
c) 30 bis 45 Gew.-% Verbindungen der allgemeinen Formel (III) und/oder (IV),
d) 18 bis 30 Gew.-% Verbindungen der allgemeinen Formeln (V) und/oder (VI), und
e) 0 bis 10 Gew.-% weiterer flüssigkristalliner Verbindungen.

10. Flüssigkristallines Medium nach einem der Ansprüche 1 bis 9, wobei die Komponente b) zu mindestens 50 Gew.-%, bevorzugt zu mindestens 80 Gew.-% aus einer oder mehreren Verbindungen der allgemeinen Formeln (lla) und/oder (IIb) besteht.

11. Flüssigkristallines Medium nach Anspruch 10, wobei die Komponente b) zu mindestens 50 Gew.-%, bevorzugt zu mindestens 80 Gew.-% aus einer oder mehreren Verbindungen der allgemeinen Formel (IIa) besteht.

12. Flüssigkristallines Medium nach einem der Ansprüche 3 bis 11, wobei die Komponente c) zu mindestens 50 Gew.-%, bevorzugt zu mindestens 80 Gew.-% aus einer oder mehreren Verbindungen der allgemeinen Formeln (IVa) bis (IVd) besteht.

13. Flüssigkristallines Medium nach einem der Ansprüche 3 bis12, wobei die Komponente d) zu mindestens 50 Gew.-%, bevorzugt zu mindestens 80 Gew.-% aus einer oder mehreren Verbindungen der allgemeinen Formeln (Va), (VIa) und/oder (VIb) besteht.

14. Elektrooptisches Anzeigenelement, enthaltend ein flüssigkristallines Medium nach einem der Ansprüche 1 bis 13.

## Claims

1. Liquid-crystalline medium comprising the compound of the formula (I)

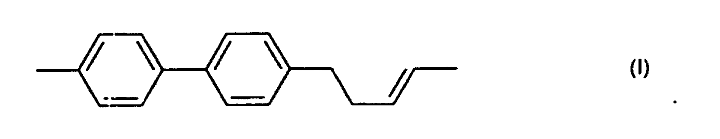

2. Liquid-crystalline medium according to Claim 1, comprising from 1 to 30% by weight, preferably from 2 to 20% by weight, particularly preferably from 3 to 10% by weight, of the compound of the formula (I).

3. Liquid-crystalline medium according to Claim 1 or 2, comprising
a) from 3 to 10% by weight of compounds of the formula (I),
b) from 10 to 50% by weight of one or more compounds of the general formula (II) 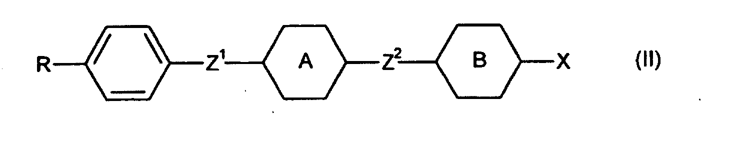 in which 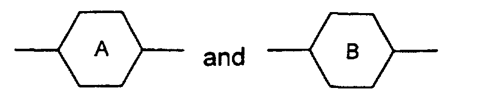 are each, independently of one another, 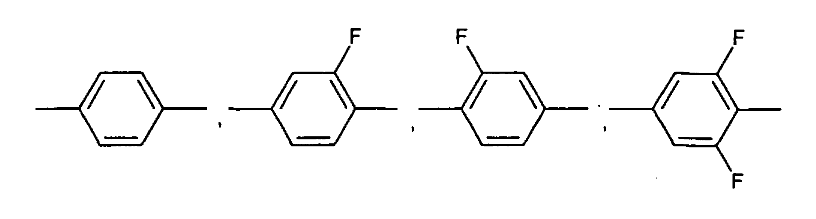 or 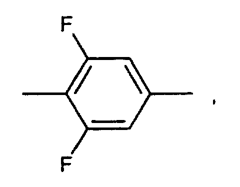
Z¹, Z² are each, independently of one another, a single bond, -CH₂-CH₂-, CF₂CF₂, -COO- or - CF₂O-,
X is F, Cl, -OCF₃ or -OCF₂CF₃, preferably F or -OCF₃, and
R is H or an alkyl or alkenyl radical having 1 to 15 carbon atoms and 2 to 15 carbon atoms, respectively, which is unsubstituted, monosubstituted by -CN or a -CF₃ or at least monosubstituted by halogen, where one or more -CH₂- groups in these radicals may, in each case independently of one another, be replaced by -O-, -S-, 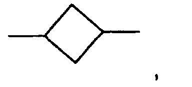 -CO-, -COO-, -OCO- or -OCOO- in such a way that O atoms are not linked directly to one another,
c) from 10 to 50% by weight of one or more compounds of the general formula (III), and/or (IV) 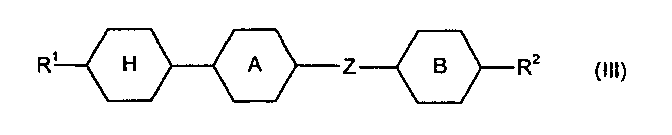 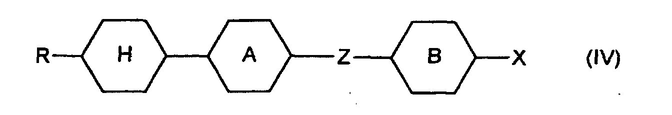 in which 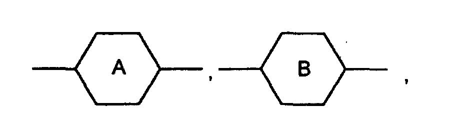 R and X are as defined above, R¹ and R² are each independently as defined for R, and Z is as defined for Z¹,
d) from 10 to 40% by weight of one or more compounds of the general formulae (V) and/or (VI) 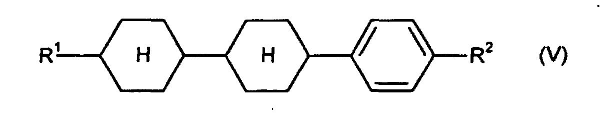 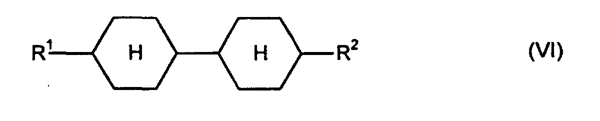 in which R¹ and R² are as defined above, and
e) from 0 to 15% by weight of one or more further liquid-crystalline compounds.

4. Liquid-crystalline medium according to Claim 3,
**characterized in that**, in the general formula (II), 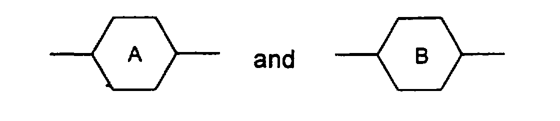 are each, independently of one another,

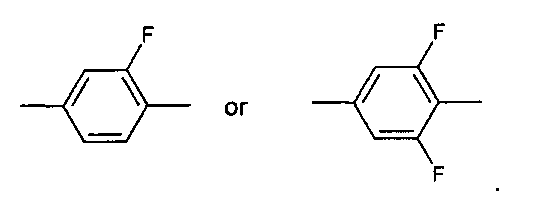

5. Liquid-crystalline medium according to Claim 3 or 4,
**characterized in that**, in the general formula (II), at least one of the groups Z¹ or Z², preferably both groups Z¹ or Z², are a single bond.

6. Liquid-crystalline medium according to one of Claims 1 to 5, comprising one or more compounds of the general formulae (IIa) and/or (IIb) 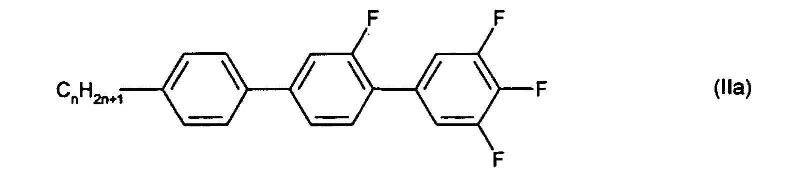 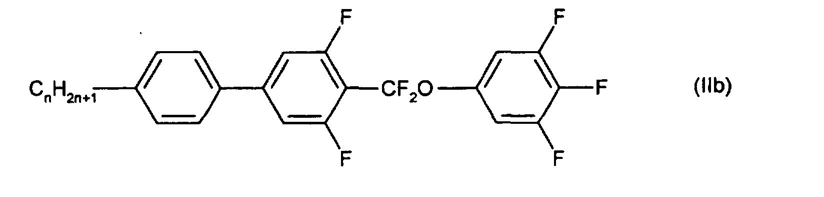 where n = 1 to 7.

7. Liquid-crystalline medium according to one of Claims 1 to 6, comprising one or more compounds of the general formulae (IVa) to (IVd) 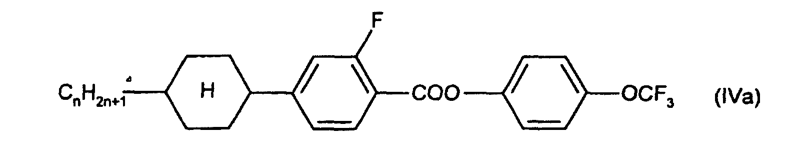 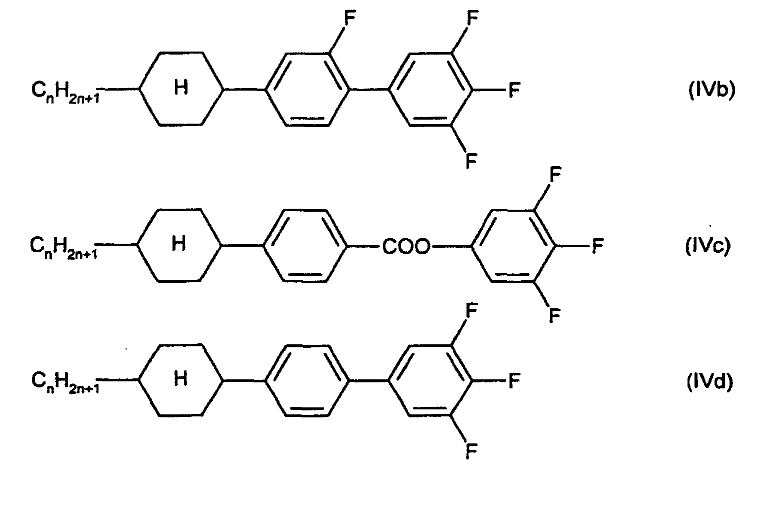 where n = 1 to 7.

8. Liquid-crystalline medium according to one of Claims 1 to 7, comprising one or more compounds of the general formulae (Va) and/or (VIa) 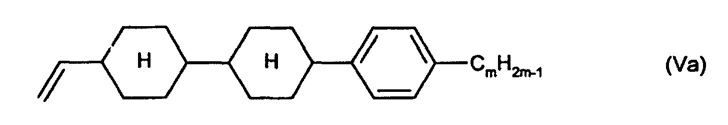 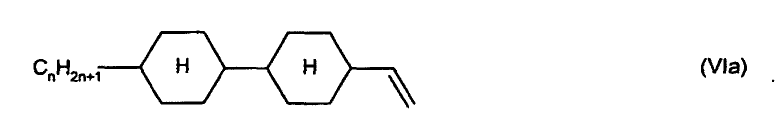 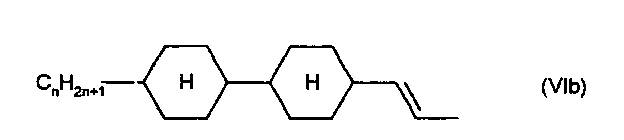 where n, m = 1 to 7.

9. Liquid-crystalline medium according to one of Claims 3 to 8, comprising
a) from 3 to 10% by weight of compounds of the formula (I),
b) from 25 to 40% by weight of compounds of the general formula (II),
c) from 30 to 45% by weight of compounds of the general formula (III) and/or (IV),
d) from 18 to 30% by weight of compounds of the general formulae (V) and/or (VI), and
e) from 0 to 10% by weight of further liquid-crystalline compounds.

10. Liquid-crystalline medium according to one of Claims 1 to 9, wherein component b) comprises at least 50% by weight, preferably at least 80% by weight, of one or more compounds of the general formulae (IIa) and/or (IIb).

11. Liquid-crystalline medium according to Claim 10, wherein component b) comprises at least 50% by weight, preferably at least 80% by weight, of one or more compounds of the general formula (IIa).

12. Liquid-crystalline medium according to one of Claims 3 to 11, wherein component c) comprises at least 50% by weight, preferably at least 80% by weight, of one or more compounds of the general formulae (IVa) to (IVd).

13. Liquid-crystalline medium according to one of Claims 3 to 12, wherein component d) comprises at least 50% by weight, preferably at least 80% by weight, of one or more compounds of the general formulae (Va), (VIa) and/or (Vlb).

14. Electro-optical display element containing a liquid-crystalline medium according to one of Claims 1 to 13.

## Revendications

1. Milieu liquide cristallin contenant le composé de formule (I)

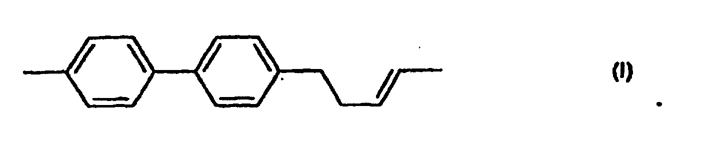

2. Milieu liquide cristallin selon la revendication 1, contenant 1 à 30 % en poids, de préférence 2 à 20 % en poids, de manière particulièrement préférée 3 à 10 % en poids du composé de formule (I).

3. Milieu liquide cristallin selon la revendication 1 ou 2 contenant
a) 3 à 10 % en poids de composés de formule (I),
b) 10 à 50 % en poids d'un ou de plusieurs composés de formule générale (II) 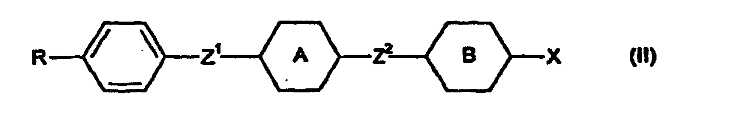 dans laquelle 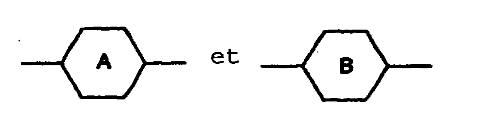 représentent indépendamment l'un de l'autre 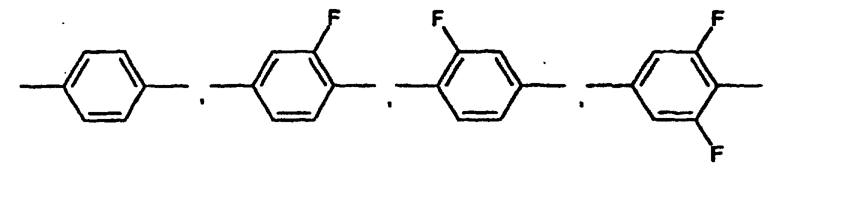 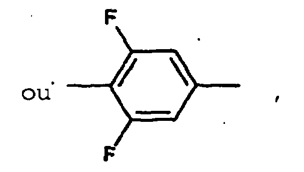
Z¹, Z² représentent indépendamment l'un de l'autre une liaison simple, -CH₂-CH₂-, -CF₂-CF₂-, -COO- ou -CF₂O-,
X représente F, Cl, -OCF₃ ou -OCF₂CF₃, de préférence F ou -OCF₃, et
R représente H ou un radical alkyle ou alcényle non substitué ou substitué une fois par -CN ou -CF₃ ou au moins une fois par un halogène, avec 1 à 15 ou 2 à 15 atomes de carbone, dans lequel dans ces radicaux un ou plusieurs groupes -CH₂- peuvent être respectivement remplacés indépendamment les uns des autres par -O-, -S-, 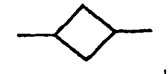 -CO-, -COO-, -OCO- ou -OCOO-, de manière à ce que des atomes O ne soient pas liés directement entre eux,
c) 10 à 50 % en poids d'un ou de plusieurs composés de formule générale (III) et/ou (IV) 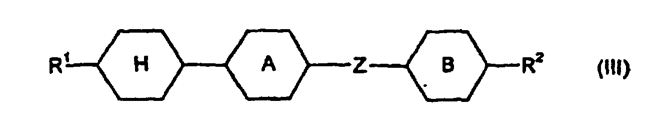 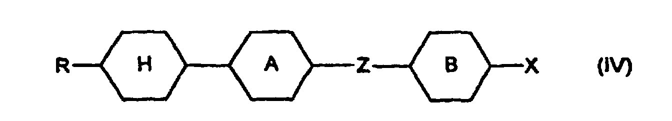 dans laquelle 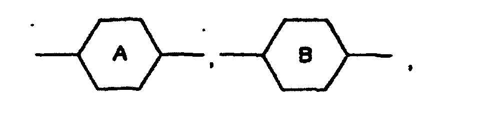 R et X sont définis comme ci-dessus, R¹ et R² ont indépendamment l'un de l'autre les significations de R et Z a les significations de Z¹,
d) 10 à 40 % en poids d'un ou de plusieurs composés des formules générales (V) et/ou (VI) 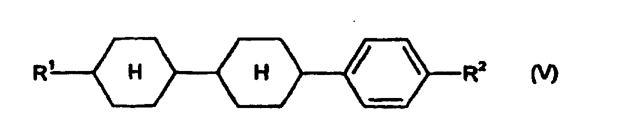 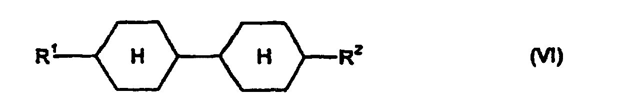 dans lesquelles R¹ et R² sont tels que définis ci-dessus, et
e) 0 à 15 % en poids d'un ou de plusieurs autres composés liquides cristallins.

4. Milieu liquide cristallin selon la revendication 3, **caractérisé en ce que** dans la formule générale (II) 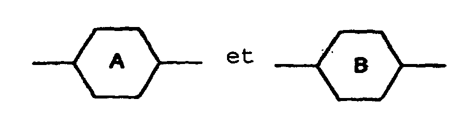 représentent indépendamment l'un de l'autre

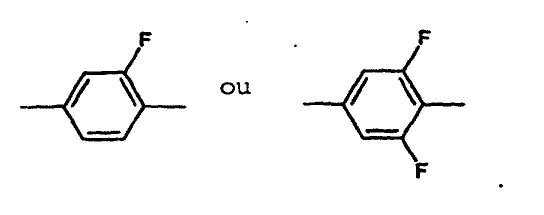

5. Milieu liquide cristallin selon la revendication 3 ou 4, **caractérisé en ce que** dans la formule générale (II) au moins un des groupes Z¹ ou Z², de préférence les deux groupes Z¹ et Z² sont une liaison simple.

6. Milieu liquide cristallin selon l'une des revendications 1 à 5 contenant un ou plusieurs composés des formules générales (IIa) et/ou (IIb) 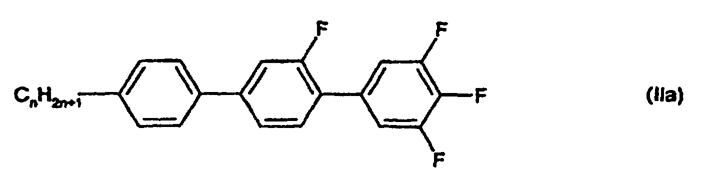 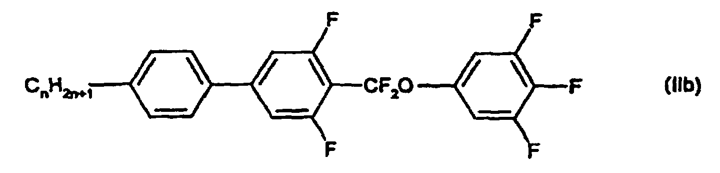 avec n = 1 à 7.

7. Milieu liquide cristallin selon l'une des revendications 1 à 6, contenant un ou plusieurs composés des formules générales (IVa) à (IVd) 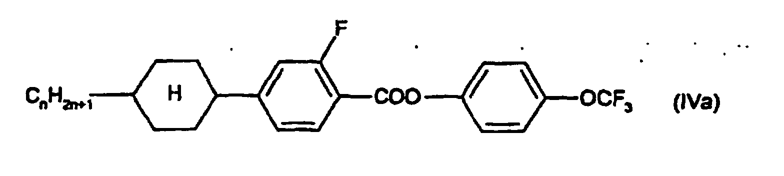 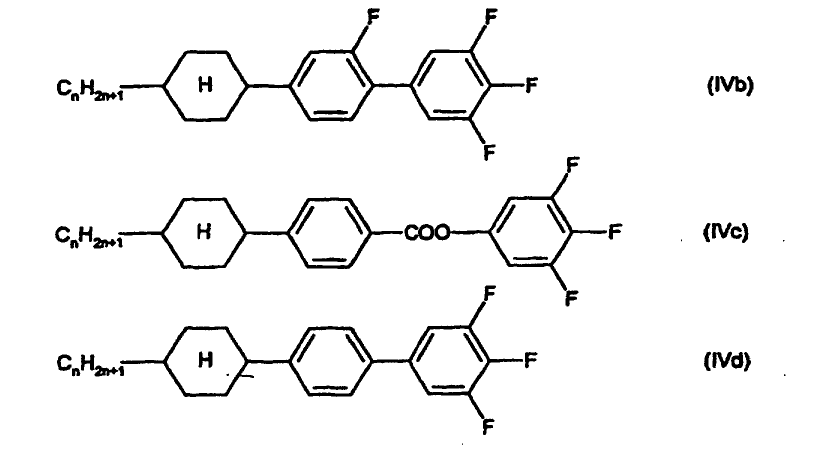 avec n = 1 à 7.

8. Milieu liquide cristallin selon l'une des revendications 1 à 7, contenant un ou plusieurs composés des formules générales (Va) et/ou (VIa) 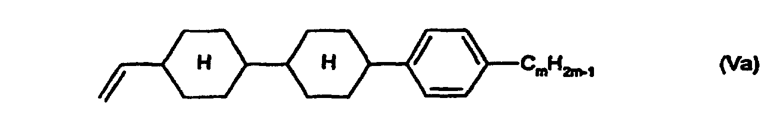 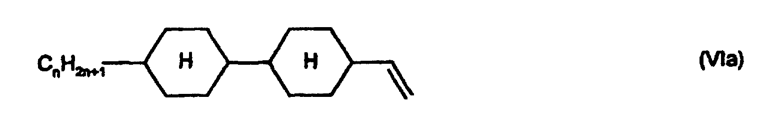 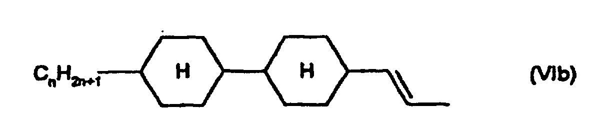 avec n, m = 1 à 7.

9. Milieu liquide cristallin selon l'une des revendications 3 à 8, contenant
a) 3 à 10 % en poids de composés de formule (I),
b) 25 à 40 % en poids de composés de formule générale (II),
c) 30 à 45 % en poids de composés de formule générale (III) et/ou (IV),
d) 18 à 30 % en poids de composés de formule générale (V) et/ou (VI),
e) 0 à 10 % en poids d'autres composés liquides cristallins.

10. Milieu liquide cristallin selon l'une des revendications 1 à 9, dans lequel le composant b) est constitué jusqu'à au moins 50 % en poids, de préférence jusqu'à au moins 80 % en poids d'un ou de plusieurs composés des formules générales (IIa) et/ou (IIb).

11. Milieu liquide cristallin selon la revendication 10, dans lequel le composant b) est constitué jusqu'à au moins 50 % en poids, de préférence jusqu'à au moins 80 % en poids d'un ou de plusieurs composés de formule générale (IIa).

12. Milieu liquide cristallin selon l'une des revendications 3 à 11, dans lequel le composant c) est constitué jusqu'à au moins 50 % en poids, de préférence jusqu'à au moins 80 % en poids d'un ou de plusieurs composés des formules générales (IVa) à (IVd).

13. Milieu liquide cristallin selon l'une des revendications 3 à 12, dans lequel le composant d) est constitué jusqu'à au moins 50 % en poids, de préférence jusqu'à au moins 80 % en poids d'un ou de plusieurs composés des formules générales (Va), (VIa) et/ou (VIb).

14. Elément d'affichage électro-optique, contenant un milieu liquide cristallin selon l'une des revendications 1 à 13.
